# EUROPEAN PATENT APPLICATION

(11) **EP 4 650 827 A1**
(43) Date of publication of application: **19.11.2025**
(21) Application number: 24176466.1
(22) Date of filing: 16.05.2024
(51) Int. Cl.: G01S 13/931

(54) **VEHICLE SURROUNDING AWARENESS SYSTEM**

(71) Applicant: Novelic Doo Beograd - Zvezdara, 11000 Belgrade (RS)
(72) Inventor: BRANKOVIC, Veselin, 11000 Belgrade (RS); SIMIC, Nenad, 11000 Belgrade (RS); MIHAJLOVIC, Veljko, 11000 Belgrade (RS); TASOVAC, Darko, 11000 Belgrade (RS)
(74) Representative: Dennemeyer & Associates S.A.

(57) **Abstract**

The proposed innovative vehicle awareness surrounding system, based on radar sensing, provides visual information to the vehicle driver, with a maximum field of awareness larger than 300 degrees, typically better than 330 degrees, an affordable total system cost, by using two radar modules, each having a 180-degree field of view, with processing on the radar module. There is no explicit need for processing on domain controllers or vehicle processing units, proposed for autonomous driving. The proposed system utilizes artificial intelligence methodology using radar point cloud data for classifying the objects around the vehicle. An artificial intelligence-backed classification is executed, being previously trained by sets of actual radar measurements annotated data. Additionally, the proposed system may issue alerts to the driver, provide information to the vehicle control system to make autonomous actions, and wirelessly send surrounding data to the cloud. Moreover, the proposed system may provide parking support.

## Description

### TECHNICAL FIELD

The present disclosure refers to a vehicle-surrounding awareness system consisting of two mm-wave radar sensor modules, each having a field of view of 180 degrees, and the capability to process the sensor data. The proposed system provides awareness of surrounding vehicles while driving. The proposed system utilizes AI methodology for data processing to classify the objects around the vehicle in question, using radar point cloud data.

### STATE OF THE ART

The state of the art blind spot detection and rear radar monitoring systems are outlined in the following patents. Present-day state of the art vehicle surrounding awareness systems, if based on radar sensor systems, use one of two state of the art radar arrangements: two corner radar sensors plus rear radar systems in the middle of the rear side of the vehicle, or simple two corner radar sensor systems, without a radar system in the middle of the vehicle, where each of the radar systems are covering a 120-degree field of view. Therefore, the maximum field of awareness in the driving direction is smaller than 300 degrees, it is typically 240 degrees. The proposed innovative vehicle awareness surrounding system provides a maximum field of awareness larger than 300 degrees, or typically 330 degrees, with the total system cost comparable to the state of the art systems.

US7552012B2 Device for detecting objects in the blind spot of a vehicle introduces a two-sensor approach for blind spot detection on one vehicle corner. Both proposed sensors in the constellation have a field of view of less than or equal to 120 degrees.

US8527151B2 Side impact safety system with blind-spot detection radar data fusion introduces a motor vehicle blind-spot detection system with a remote sensor covering a rear-quadrant blind spot sensing zone and a forward-quadrant side impact sensing zone. The proposed blind spot detection sensor has a field of view of less than or equal to 120 degrees.

US20110291874A1 Vehicle radar system and method for detecting objects introduces the vehicle radar system which includes a side radar sensor providing a detection area at the side of the vehicle and a rear radar sensor providing a detection area at the rear of the vehicle. Each of the side and rear radar sensors includes a monopulse radar device with a field of view less than or equal to 120 degrees.

US6680689B1 Method for determining object classification from side-looking sensor data introduces an object type of a 3-D object sensed by a remote sensor for detecting objects to a side of a transportation vehicle. The object is classified according to whether the object is a stationary object or a moving vehicle.

KR102065626B1 Vehicle radar system with blind spot detection introduces a vehicle radar system for monitoring the blind spot of a vehicle. The system includes a radar transmitter mounted on the vehicle and a transmitting antenna coupled with the radar transmitter. The transmitting antenna transmits patterned radiation to an area adjacent to the vehicle, the pattern comprising a first radiation lobe and a second radiation lobe. The proposed vehicle radar system has a field of view of less than or equal to 120 degrees.

US20110025548A1 System and method for vehicle sensor fusion introduce a system and method for tracking and evaluating targets sensed by one or more active safety sensors in a motor vehicle. The system and the method track detected targets from one or more sensors as fused tracks and determine the maturity and plausibility ofsuch fused tracks for determining an appropriate response.

US20090167514A1 Combined Radar Backup Assist and Blindspot Detector and Method introduces a system and method for detecting objects in the blind spot and behind a vehicle. According to the disclosed embodiments, the system includes a first and second sensor having a combined long/narrow detection antenna and a short/wide detection antenna. The proposed vehicle radar system has a field of view of less than or equal to 120 degrees.

US20160252610A1 Blind-spot radar system with improved semi-trailer tracking introduces the step providing a system configured to detect objects proximate to a vehicle using radar. The system detects objects within the first portion of the blind-spot zone and is reconfigured to detect objects within the second portion of the blind-spot zone differentfrom the first portion. The proposed vehicle radar system has a field of view of less than or equal to 120 degrees.

US10732262B2 Apparatus and method for detecting alignment of the sensor in an automotive detection system, introduces the first sensor which transmits first transmitted signals into a region and receives first reflected signals and generates first receive signals. The second sensor transmits the second transmitted signals into the region and receives the second reflected signals and generates the second received signals. The proposed vehicle radar system has a field of view of less than or equal to 120 degrees.

US11854397B2 Rear lateral blind-spot warning system and method for vehicle introduces a rear lateral blind-spot warning system for a vehicle including a sensor configured to sense position information and movement information on an external obstacle, a determiner configured to determine the type of the external obstacle located in a rear blind spot. The proposed vehicle radar system has a field of view of less than or equal to 120 degrees.

US8552848B2 System and method for combined blind spot detection and rear crossing path collision warning includes a vehicle equipped with blind spot detection and rear crossing path collision warning system. The proposed vehicle radar system has a field of view of less than or equal to 120 degrees.

EP2972467B1 Vehicle radar system with blind spot detection introduces a special position of the corner radars with a special orientation angle to the vehicle symmetry. The proposed vehicle radar system has a field of view of less than or equal to 120 degrees.

EP3418768A1 A vehicle radar system comprising two radar sensor arrangements introducing two radar sensor arrangements: first and second separated by a certain distance (d). The proposed vehicle radar system has a field of view of less than or equal to 120 degrees.

US7504986B2 Blind spot sensor system introduces two devices: a first device for emitting the first radar beam, and a second device for emitting the second radar beam. The radial visual range of the first radar beam inclines counter to the direction of travel of the motor vehicle and the radial visual range of the second radar beam (beam II) is oriented in a substantially vertical manner in relation to the direction of travel such that the visual range of the radar beams at least partially overlap and cover, substantially, the monitoring region. The proposed vehicle radar system has a field of view of less than or equal to 120 degrees.

### SUMMARY

The basic motivation for the invention is to provide a new generation of vehicle awareness surrounding systems, providing a maximum field of awareness larger than 300 degrees, typically 330 degrees, with a minimum system cost, favorable power consumption, and extra features, compared to the state of the art solutions. The usage of only two radar sensor modules, each having a 180-degree field of view (FoV), is proposed. Their arrangement, with special positioning angles symmetrical to the vehicle's symmetry line, creates an awareness surrounding system with more than 300 degrees of coverage. Advantageously related signal processing for the classification of moving objects in the rear part of the vehicle and on the sides, including object positions and dynamics of said objects, is performed respectively for one half of the observing area within one 180-degree radar sensor and for the second half of the observing area on the second part of 180-degree radar sensor, being both part of the proposed system. The proposed vehicle awareness surrounding system, which provides a maximum field of awareness larger than 300 degrees, is realized in an affordable way, by providing better performance (larger awareness) when compared to the standard solution of using two blind spot detection radar sensors. The state of the art solutions make use of the domain controller and the central vehicle computing unit for signal processing, which necessitates transferring the radar sensor point cloud data using high-speed automotive communication protocols like Automotive Ethernet, which requires specific harness solutions, and more expensive corner radar connectors, with more than 4 pins. This is necessary given that the state of the art corner radar sensors (same as rear radar sensors) are used to provide features for autonomous driving, which is not necessary for driver awareness. The proposed solution uses affordable, low-throughput automotive communication protocols, such as CAN protocol, with low-cost 4-pin connectors. Additionally, the proposed two radar sensors with a 180-degree field of view perform more processing than the state of the art blind spot detection radar sensors, including full processing of the point cloud data information, whereas the state of the art blind spot radars mainly generate the radar point cloud data, which is then processed externally.

Therefore, the proposed innovative solution for vehicle awareness provides a larger maximum field of awareness (largerthan 300 degrees, typically up to 330 degrees) than the state of the art solutions, and it is targeted for surrounding awareness as the major application, without requiring expensive external processing sub-systems, which are typically needed for autonomous driving. This innovative solution offers more safety and comfort to the driver, without necessarily imposing requirements for more expensive processing parts, like domain controllers or vehicle Al sensor computation units, for autonomous driving features. The proposed system provides visual information to the driver using predefined artificial pictures dedicated to the addressed set of classification categories. The proposed system can advantageously issue alerts to the driver. The proposed system can send information to the vehicle control system advantageously to initialize the autonomous, dynamic change of the said vehicle. The proposed system can advantageously send surrounding awareness information wirelessly to the cloud, to be assessed by other systems or persons. Additionally, the proposed system may have optional features related to parking application support.

### BRIEF DESCRIPTION OF THE DRAWINGS

Fig. 1 shows a state of the art solution, which may be used for vehicle surrounding awareness, using the state of the art corner radars for blind spot detection.
Fig. 2 shows the proposed system for vehicle surrounding awareness using a 180-degree field of view radar sensor, with its own digital processing capability.
Fig. 3 shows awareness coverage of the proposed system for vehicle surrounding awareness using the 180-degree field of view, compared to awareness coverage of the state of the art system, when the minimum detection distance in the rear area is the same.
Fig. 4 shows the classification of processing functionality performed on the 180-degree field of view radar sensor modules, they being an integral part of the proposed system.
Fig. 5 shows possible realization options of the proposed systems, showing the 180-degree field of view system parts, integrated in the vehicle environment.
Fig. 6 shows a possible example of the awareness information communication from the system to the driver, from the display side.

### DETAILED DESCRIPTION OF THE INVENTION

The state of the art Vehicle surrounding awareness system is realized using video sensing and video processing. These systems have specific drawbacks related to video sensing compared to radar sensing, like visibility in case of fog, rain, or strong sun. The realization of the Vehicle surrounding awareness system by radar as a system can be approached using the state of the art corner radar sensors, which are used for the state of the art autonomous driving features, and as blind spot detectors. They are not used for classification of the targets around the vehicle using its own processing power, they are transmitting the pre-processed data to related domain controllers or directly to the vehicle computation processing units, where the processing is done and used with other video sensors, or in the simplest version blind spot radar detectors are making simple alerts to the driver showing that something is in the blind angle. There is a need to provide the driver with the Vehicle surrounding awareness system based on radar, but also to provide a system that is affordable and used for awareness to the driver, without a need to be integrated into more complex autonomous driving vehicle infrastructure. In other words, the Vehicle surrounding awareness system brings benefits to the driver, where those benefits may be provided to the driver without a need to have more expensive relations with autonomous driving enabling processors and without the necessity to have video & radar fusion, but still providing usage in all weather conditions like fog, heavy rain, complete darkness or very strong sun in a specific direction, making video sensor blind.

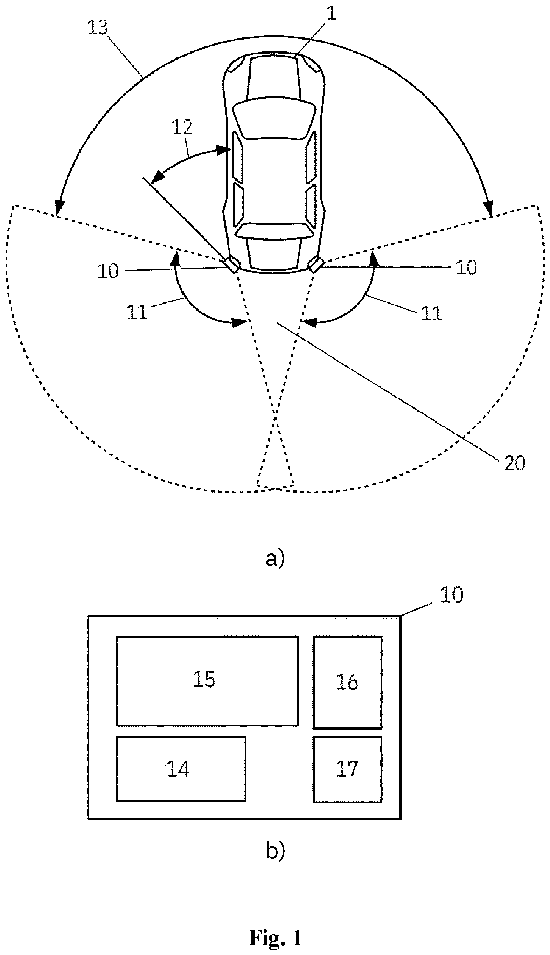

Fig. 1a shows the possible vehicle surrounding awareness system with the state of the art corner radars. Vehicle 1 has corner radars 10 positioned in the rear part of Vehicle 1, each having a field of view (FoV) of 120 degrees. The state of the art radar corner systems 10 have an angle of 12 degrees between a printed circuit board with a planar antenna for radiation of corner radar 10 and vehicle 1. Angle 11 is the radiation diagram field of view of a corner radar having around 120 degrees. In this constellation, the left border of the field of view of the left corner radar 10 and the right border of the right corner radar 10 are building angle 13. Angle 13 shows the area that cannot be covered by the observation of the state of the art solution for vehicle awareness. The angle 13 is in this arrangement, 150 degrees, if the angle 12 is symmetrical having 45 degrees. So in a 150-degree area, out of 360 degrees, it is not possible to have vehicle awareness. If angle 12 is minimized to 30 degrees, there is no vehicle 1 surrounding awareness in the 120-degree area and there is an awareness in the 240-degree area. However, in the last case, there is a significant gap of 20 degrees in sensing in the direct rear part of the vehicle, and the objects that are very close to the rear part of vehicle 1 cannot be detected. So, using the state of the art radar sensing technology to have a minimum angle 13, one needs to sacrifice minimum direct detection in the real direction of vehicle 1. The other way to achieve to have an additional radar sensor in the middle of the rear part of vehicle 1 is to fill the gap 20. This, however, increases the total system cost. Moreover, the state of the art corner radar sensors 11, and executing pre-processing, providing point cloud radar data to domain controllers 18 and further to the main vehicle processing unit 19. Unit 19 is making final classification of the objects, by using the state of the art methodologies. So, the state of the art vehicle surrounding awareness system with object classification needs external processing units in two versions, with domain controllers 18 and main processing unit 19, or only with main processing below-10 Mbit/s unit 19. The main processing units typically execute radar video fusion, and it is inherently expensive, supporting specific levels of vehicle autonomous driving. If the state of the art corner radars 11 are used without processing entity 19, they are detection objects in that case, without providing their classification in specific categories, using own processing power on each corner radar 11. Fig. 1b outlines the building of functional parts of the state of the art corner radar sensors 11. A state of the art corner radar sensor 10 has RF part 14, comprising an antenna system and mm-wave RF chip, and a radar point cloud processing unit 15. A radar point cloud processing unit 15, as a specific realization option of entity 15, can be part of the integrated radar integrated circuit having both RF chip portion and entity 15 in one silicon. A radar point cloud processing unit 15 has advantageously part of the radar sensor point cloud calculation, calculated by hardwired processing, and part by using soft processing. A state of the art corner radar sensor 10 has more sophisticated realization solutions digital interface of entity 16, enabling high-speed digital data connections larger than 10Mbit/s. In many cases, entity 16 is released as an automotive ethernet interface allowing hundreds of Mbit/s in data transition. An entity 17 has a low throughput automotive digital interface with less than 10Mbit/s, in many cases being realized with CAN family of protocols or in the simplest form by LIN family of protocols. Typically, entity 16 and entity 17 are supported in the way that state of the art corner radar sensor 10 uses a 10-pin connector. If the state of the art corner blind spot detection sensor 10 has only a 4-pin connector, supporting only low-speed interface 17, typically CAN protocol, this state of the art corner blind spot detection sensor 10 does not provide the classification of the targets on its module. It simply sends over entity 17 information that there is an object in the blind spot detection area, which covers a 120-degree field of view, up to 50 meters of detection, without getting information on what kind of object is detected.

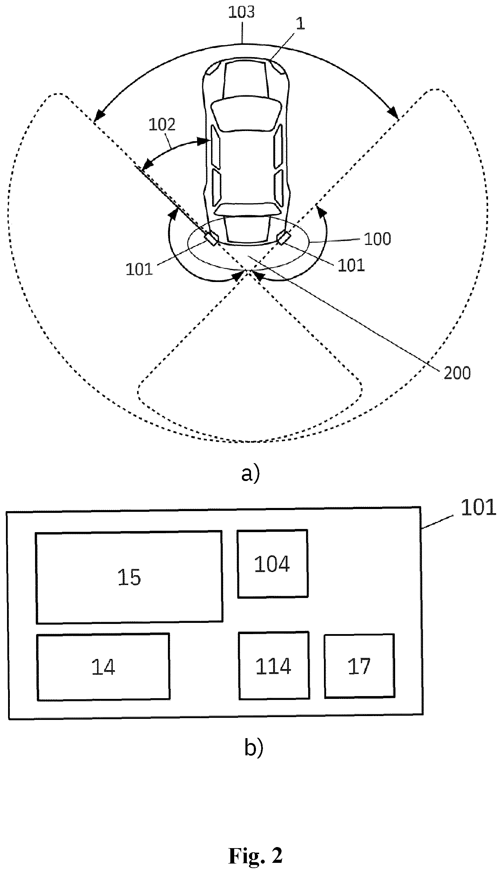

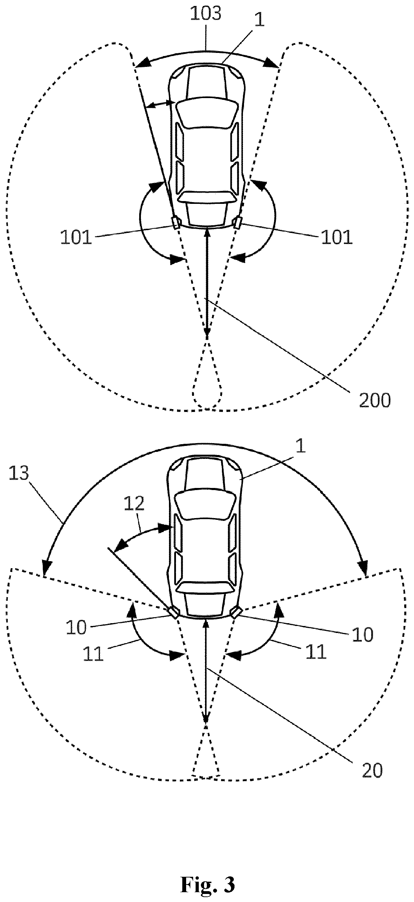

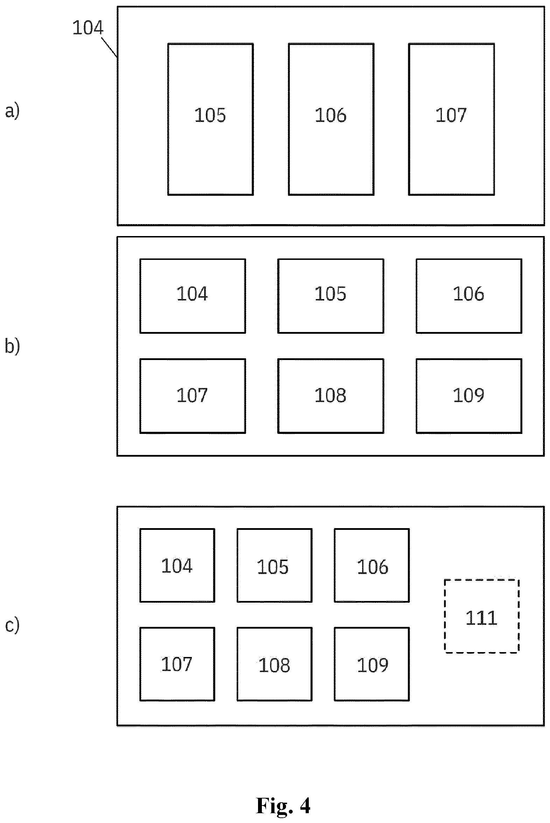

Fig. 2 shows the proposed Vehicle surrounding awareness system 100, comprising two radar sensor systems 101, being positioned symmetrically in the rear part of vehicle 1, having angle 102 to the sides of vehicle 1, wherein each of them has a 180-degree field of view observation. Regarding the non-observation area, determined by angle 103, in the case when we have an angle 102 being 45 degrees, an observation area would be 270 degrees. In the same constellation, the state of the art approach described in Fig. 1 has a non-observation area of 150 degrees and an observation area of 210 degrees. Moreover, the proposed solution of Fig. 2 has a dramatically lower blind area in the rear part of the vehicle. Gap 200 is smaller than gap 20 in the case of the state of the art solution, so the ability to detect an object near the middle of the rear part of vehicle 1 is greater in the case of the proposed solution in Fig. 2. If the quality of observation merit is related to the minimum detection distance from the center of vehicle 1, and if it is set to be identical for the state of the art case of Fig. 1 and the new proposed system of Fig. 2, the observation area of the state of the art solution in that case will be 120 degrees worse than the proposed solution, as it can be observed in Fig. 3. There is a clear operation advantage of the proposed system 100, versus the state of the art solution. Fig. 2a outlines the functional blocks of the 180-degree mmWave sensor 101. It may be observed that, by their plurality of the realization options, functional entity 14, functional entity 15, and functional entity 17, are the same in state of the art corner sensor 11 and 180-degree mmWave sensor 101. However, the 180-degree mmWave sensor 101 uses functional entity 104 to provide the classification of the targets using inputs of entity 15. Instead of sensing radar point cloud to be processed for classification in entity 18 and entity 19, the 180-degree mmWave sensor 101 is advantageously doing the processing for classification on own module, making the usage of entity 18 and entity 19 for the application of vehicle surroundingawareness obsolete. In otherwords, that means that the proposed vehicle surrounding system 100 can be used in vehicles that do not necessarily have autonomous driving functions (which is required by expensive entity 19), but still keep providing important information to the driver, improving overall safety and overall comfort, in an affordable way. These application features enable the proposed vehicle surroundings system 100 to be deployed independently of the autonomous driving environment. The 180-degree mmWave sensor 101 does not necessarily need to have a 10-pin connector to support high-speed data exchange over entity 16, advantageously using a simple 4-pin connector and the established state of the art vehicle network, typically realized using the family of CAN protocols. This requires less harness and less overall system cost, combined with lower maintenance costs compared to the state of the art solution. Classification entity 104 performs classifications of the detected objects in different classification realization options as described in Fig. 4. The classification process is a signal processing process using an artificial intelligence (AI) approach, with arbitrary algorithmic approaches and a multilevel (AI) approach, which is advantageously set to use the minimum of processing resources with minimum memory and processing power requirements. In an AI approach, the system is fed with training information for different classification levels, which allows the AI module in entity 104 to make an aimed classification. Machine learning is deployed with an optional deep learning, using the neural network approach. The said training information is two-fold: defined as a set of information using actual cloud information set by numerical data: addressing ranges of length of objects, ranges of speeds of objects, and ranges of size of objects, wherein a point cloud data processing is estimating those values. Point cloud data clusters are obtained by actual, intentionally performed radar sensor measurements of objects, being part of the specific classification category. Fig. 4a shows basic classification categories, allowing the minimum artificial intelligence (AI) computation resources and the minimum system cost, by still providing the driver with the sufficient minimum setup of information of the proposed vehicle surrounding awareness system 100. Entity 104 provides classification in three groups, using classification entity 105 for passenger vehicles, classification entity 106 for commercial vehicles, addressing middle-size commercial vehicles like trucks, and classification entity 107 for the detection of motorbikes. These basic classification features are proposed as a basic choice of awareness being able to give the most essential information to the driver, what is going on around vehicle 1, while driving. Fig. 4b shows an extended set of classifications to basic classifications, including additional classifications by entity 108 for the detection of bicycles, as well as by entity 109 for classifications of very long commercial vehicles with trailers. Fig. 4b shows an extended set of classifications to the classification entities of Fig. 3b including additional classification by classification entity 110 for detecting three-wheelers, and classification entity 111 for classification of commercial vehicles of a small size, smaller than truck. A classification of the objects around vehicle 1 is performed by pre-calculated point cloud data, wherein artificial intelligence methodology is used. In addition to radar point cloud data, artificial intelligence methodology also utilizes the speed of detected objects. In entity 15, calculated radar point cloud data are passing through artificial intelligence functionality. The artificial intelligence functionality is being previously trained by annotated radar system data, being related to the classification categories. An annotated radar system data is pre-recorded and used for artificial intelligence functionality, wherein the said artificial intelligence functionality uses the state of the art calculation methodologies and state of the art algorithms. The choice of the state of the art calculation methodologies and state of the art algorithms is done advantageously, with the smallest computational and memory footprints, intentionally coping with detection accuracy tradeoffs. In particular said artificial intelligence methodology is using combination of more than one state of the art algorithmic approaches: support vector machines (SVM) with decisions trees, multiply layer perception (MLP), convolutional neural network (CNN) and vision transformer (ViT), all said approaches of them being invented for video processing, wherein they are applied on the radar point cloud signals only, and not on video signals.

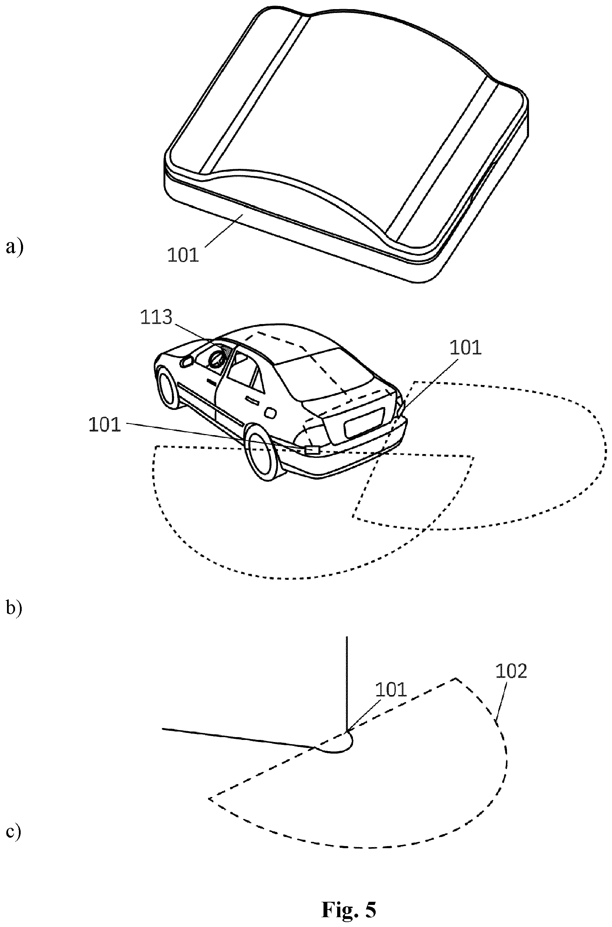

The proposed 180-degree field of view radar sensor 101 has an entity 114 providing tracking of the objects. All information about awareness around a vehicle received from entity 101 are sent continuously, advantageously over entity 17 to the display 113 in front of the vehicle. Fig. 5a shows the outlook of one practical realization option of the mmWave radar sensor having the 180-degree field of view 101, as a part of the proposed vehicle surrounding awareness system 100. Fig. 5b shows a possible position of said mmWave radar sensor having a 180-degree field of view 101 on the rear vehicle corner, with a CAN connection to the display 113 in front of the driver. Fig. 5c shows the mmWave radar sensor having a 180-degree field of view 101 from the top on the vehicle corner showing a 180-degree field of view 112. The mmWave radar sensor having the 180-degree field of view 101 is capable of detecting and classifying objects at more than 50 meters by using printed antenna strings with larger than 5 patches in the related antenna strings, through the plurality of the radiation patch realization options.

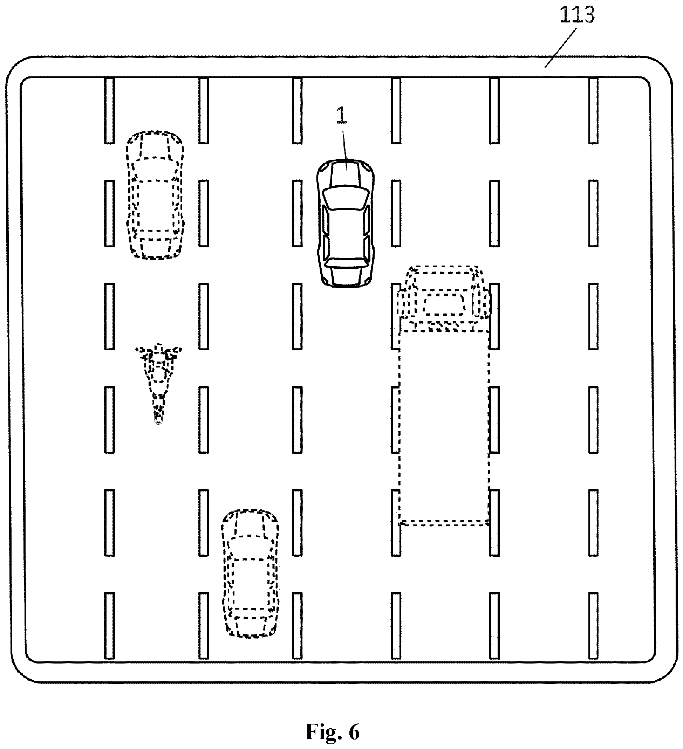

Fig. 6 shows a possible example of the awareness information communication from the system to the driver, from the display side. The driver is getting visual information with artificial pictures related to the classification results of the systems. The artificial pictures are positioned at specific distances and angles in relation to vehicle 1, with their moving directions and relative speeds. The proposed surrounding awareness system 100 can also be advantageously used to issue warnings to the drivers from the said cases, where the distance of the moving object to the said vehicle 1 is smaller than the prescribed value. The alerts can also be issued in the case when proposed system 100 has predicted that the arbitrary vehicle around the said vehicle 1 is about to hit the said vehicle 1 or it is about to come very close to the said vehicle 1 in the future, based on real-time calculated position, speed, and direction of movement. Instead of, or in parallel to, sending the said alerts to the driver related to said application scenarios, the proposed system 100 may send alerts to the said vehicle 1's controlling infrastructure. This controlling infrastructure can use the said alert to enforce the change of the said vehicle dynamics. Changing the said vehicle 1's dynamics could be one or a combination of more than one of the following activities: braking, accelerating, speed changing from one value to another value, lane changing, as well as general changing of directions, without changing speed and accelerating.

Information about the said vehicle 1 surrounding awareness, obtained by the proposed system 100, can be advantageously transmitted to the cloud, using wireless means of the said vehicle 1. The information of the cloud can be further processed and used for overall traffic monitoring or driving behavior analysis, using vehicle 1. This information on the cloud can be further used for commercial purposes, allowing an introduction of the variety of business processes using the provided data.

The proposed system 100, having the said 180-degree radar sensors 101, can provide parking support to the said vehicle 1, advantageously and in addition to providing the vehicle surrounding awareness system. The said 180-degree radar sensors 111 can track the objects such as position, speed, the angle to the said vehicle 1, close to the said vehicle 1, so that the parking of vehicle 1 can be executed autonomously. Advantageously, the parking support is conducted using the processing on the said digital processing unit 114, on one or both said entities 101.

In a further aspect, a method implemented in a mmWave sensor signal processing hardware (HW) for providing vehicle surrounding awareness using the system described above is provided It is noted that all the aspects and technical features related to the system reflect the functionality of this method. It is noted here that the processing does not occur on a central unit, such as the computer of the vehicle. Rather, the processing occurs on the system itself, in particular on the mmWave sensor module.

Additionally, a computer program product is provided, said computer program product comprising instructions which, when the program is executed by a computer, cause the computer to carry out the method according to the previous aspect.

Further aspects and examples are found in the following numbered clauses:
1. System providing vehicle surrounding awareness, comprising of:
   two mmWave radar sensor modules, each having a 180-degree field of operation, where the field of operation is defined by a 6dB antenna radiation diagram drop, having identical hardware components, and having the same respective hardware arrangement inside the said mmWave sensor modules, and having access over the vehicle's communication network to a display part, wherein the display part is positioned in the visual field of the driver;
   wherein each of the said mmWave radar sensor modules is positioned on the vehicle's rear corners, where the rear side of the vehicle is defined as being opposite to the main driving direction side;
   wherein the radiation diagram in the elevation plane of the said mmWave radar sensor modules has maximum radiation in the horizontal plane, being parallel to the ground plane;
   wherein the radiation diagram in the azimuth plane of the said mmWave radar sensor modules has maximum radiation in the plane being perpendicularto the backsides of said mmWave radar sensor modules;
   wherein the back side of one said mmWave radar sensor is building an angle larger than 60 degrees with the back side of one said mmWave radar sensor modules;
   wherein at least one of one said mmWave radar sensor modules has digital processing hardware functionality, performing a classification of objects, being detected by the said mmWave radar sensor modules, using radar sensor point cloud data, being previously generated by other functionality, within the said mmWave radar sensor modules;
   wherein at least one of one said mmWave radar sensor modules is sending classification information about said objects around the vehicle, objects distances to vehicle, object relative positions to the vehicle, and relative speed of the vehicles; wherein basic classification categories are: passenger vehicles, large commercial vehicles not exceeding 10 meters in length and motorbikes;
   wherein classification information is physically sent from at least one of one said mmWave radar sensor modules over a 4-pin connector;
   wherein the said display part, being positioned in the visual field of the driver, uses the said classification information and shows dynamic positions of the said objects, wherein the objects are represented by artificial pictures, related to said basic classification categories, wherein the total view coverage in the azimuth plane is larger than 300 degrees.
2. System according to clause 1,
   wherein the said mmWave sensor modules have connectors with more than 4 pins.
3. System according to clause 2,
   wherein the said basic classification categories are extended to the detection of bicycles.
4. System according to clause 3,
   wherein the said basic classification categories are extended to the detection of long commercial vehicles, exceeding 10 meters in length.
5. System according to clause 4,
   wherein the said basic classification categories are extended to the detection of three-wheel commercial vehicles, whose length does not exceed 3 meters.
6. System according to the previous clause,
   wherein the classification of objects around the vehicle having the said system is performed by artificial intelligence functionality using pre-calculated point cloud data,
   wherein artificial intelligence functionality is making a classification decision, being previously trained by radar system annotation data, wherein the said radar system annotation data are related to the classification categories,
   wherein the speed of objects around the vehicle is considered in conjunction with the point cloud radar data in the process of artificial intelligence computation.
7. System according to previous clauses,
   wherein the surrounding awareness information is continuously updated on the said display and is visually accessible to the said driver.
8. System according to previous clauses,
   where the surrounding awareness information is used to issue warnings to the said driver.
9. System according to claim 7,
   wherein the surrounding awareness information is sent by the said vehicle's wireless connectivity to the cloud, to be accessed by other systems.
10. System according to previous clauses,
   wherein the surrounding awareness information is used by the vehicle infrastructure to perform actions autonomously, wherein actions change the dynamical behavior of the said vehicle.
11. System according to previous clauses,
   wherein the surrounding awareness information is used additionally as a parking support and provides warning distances to the vehicle's nearby objects, without the necessity to execute the classification of the nearby objects.
12. Method implemented in a mmWave sensor signal processing HW for providing vehicle surrounding awareness using the system according to any one of the previous clauses, the method comprising:
   performing a classification of objects around the vehicle to obtain a classification information; and
   using said classification information to show dynamic positions of the objects relative to the vehicle.
13. Method according to clause 12, wherein the classification of objects around the vehicle is performed by artificial intelligence functionality using pre-calculated point cloud data, wherein artificial intelligence functionality is making a classification decision, being previously trained by radar system annotation data, wherein the said radar system annotation data are related to the classification categories,
   wherein the speed of objects around the vehicle is considered in conjunction with the point cloud radar data in the process of artificial intelligence computation.
14. Method according to any one of clauses 12 to 13,
   where said artificial intelligence functionality is using more than one algorithmic approaches: support vector machines (SVM) with decisions trees, multiply layer perception (MLP), convolutional neural network (CNN) and vision transformer (ViT), being applied on said radar point cloud data.
15. Computer program product comprising instructions which, when the program is executed by a computer, cause the computer to carry out the method of any one of clauses 12 to 14.

## Claims

1. System providing vehicle surrounding awareness, comprising of:
two mmWave radar sensor modules, each having a 180-degree field of operation, where the field of operation is defined by a 6dB antenna radiation diagram drop, having identical hardware components, and having the same respective hardware arrangement inside the said mmWave sensor modules, and having access over the vehicle's communication network to a display part, wherein the display part is positioned in the visual field of the driver;
wherein each of the said mmWave radar sensor modules is positioned on the vehicle's rear corners, where the rear side of the vehicle is defined as being opposite to the main driving direction side;
wherein the radiation diagram in the elevation plane of the said mmWave radar sensor modules has maximum radiation in the horizontal plane, being parallel to the ground plane;
wherein the radiation diagram in the azimuth plane of the said mmWave radar sensor modules has maximum radiation in the plane being perpendicular to the back sides of said mmWave radar sensor modules;
wherein the back side of one said mmWave radar sensor is building an angle larger than 60 degrees with the back side of one said mmWave radar sensor modules;
wherein at least one of one said mmWave radar sensor modules has digital processing hardware functionality, performing a classification of objects, being detected by the said mmWave radar sensor modules, using radar sensor point cloud data, being previously generated by other functionality, within the said mmWave radar sensor modules;
wherein at least one of one said mmWave radar sensor modules is sending classification information about said objects around the vehicle, objects distances to vehicle, object relative positions to the vehicle, and relative speed of the vehicles; wherein basic classification categories are: passenger vehicles, large commercial vehicles not exceeding 10 meters in length and motorbikes;
wherein classification information is physically sent from at least one of one said mmWave radar sensor modules over a 4-pin connector;
wherein the said display part, being positioned in the visual field of the driver, uses the said classification information and shows dynamic positions of the said objects, wherein the objects are represented by artificial pictures, related to said basic classification categories, wherein the total view coverage in the azimuth plane is larger than 300 degrees.

2. System according to claim 1,
wherein the said mmWave sensor modules have connectors with more than 4 pins.

3. System according to claim 2,
wherein the said basic classification categories are extended to the detection of bicycles.

4. System according to claim 3,
wherein the said basic classification categories are extended to the detection of long commercial vehicles, exceeding 10 meters in length.

5. System according to claim 4,
wherein the said basic classification categories are extended to the detection of three-wheel commercial vehicles, whose length does not exceed 3 meters.

6. System according to previous claims,
wherein the classification of objects around the vehicle having the said system is performed by artificial intelligence functionality using pre-calculated point cloud data,
wherein artificial intelligence functionality is making a classification decision, being previously trained by radar system annotation data, wherein the said radar system annotation data are related to the classification categories,
wherein the speed of objects around the vehicle is considered in conjunction with the point cloud radar data in the process of artificial intelligence computation.

7. System according to previous claims,
wherein the surrounding awareness information is continuously updated on the said display and is visually accessible to the said driver.

8. System according to previous claims,
where the surrounding awareness information is used to issue warnings to the said driver.

9. System according to claim 7,
wherein the surrounding awareness information is sent by the said vehicle's wireless connectivity to the cloud, to be accessed by other systems.

10. System according to previous claims,
where the surrounding awareness information is used by the vehicle infrastructure to perform actions autonomously, wherein actions change the dynamical behavior of the said vehicle.

11. System according to previous claims,
where the surrounding awareness information is used additionally as a parking support and provides warning distances to the vehicle's nearby objects without the necessity to execute the classification of the nearby objects.

12. Method implemented in a mmWave sensor signal processing HW for providing vehicle surrounding awareness using the system according to any one of the previous claims, the method comprising:
performing a classification of objects around the vehicle to obtain a classification information; and
using said classification information to show dynamic positions of the objects relative to the vehicle.

13. Method according to claim 12, wherein the classification of objects around the vehicle is performed by artificial intelligence functionality using pre-calculated point cloud data,
wherein artificial intelligence functionality is making a classification decision, being previously trained by radar system annotation data, wherein the said radar system annotation data are related to the classification categories,
wherein the speed of objects around the vehicle is considered in conjunction with the point cloud radar data in the process of artificial intelligence computation.

14. Method according to any one of claims 12 to 13,
wherein said artificial intelligence functionality is using more than one algorithmic approaches: support vector machines (SVM) with decisions trees, multiply layer perception (MLP), convolutional neural network (CNN) and vision transformer (ViT), being applied on said radar point cloud data.

15. Computer program product comprising instructions which, when the program is executed by a computer, cause the computer to carry out the method of any one of claims 12 to 14.
